# EUROPEAN PATENT SPECIFICATION

(11) **EP 1 637 710 B1**
(45) Date of publication and mention of the grant of the patent: **07.11.2012**
(21) Application number: 04735356.0
(22) Date of filing: 28.05.2004
(51) Int. Cl.: F01P 11/10, F01P 5/06, B60K 11/04, E02F 9/00

(54) **CONSTRUCTION MACHINE ENGINE HOOD, CONSTRUCTION MACHINE ENGINE ROOM CONSTRUCTION, AND CONSTRUCTION MACHINE COOLING DEVICE**
BAUMASCHINENMOTORHAUBE, BAUMASCHINENMOTORRAUMKONSTRUKTION UND BAUMASCHINENKÜHLVORRICHTUNG
CAPOT MOTEUR, COMPARTIMENT MOTEUR ET DISPOSITIF DE REFROIDISSEMENT DE MACHINE

(30) Priority: 23.06.2003 JP 2003178324
(43) Date of publication of application: 22.03.2006
(73) Proprietor: Caterpillar SARL, 1208 Geneva (CH)
(72) Inventor: YOKOTA, Kenichi c/o SHIN CATERPIL.MITSUBISHI LTD., Setagaya-ku, Tokyo 1580097 (JP); SHIGEMOTO, T. c/o SHIN CATERPIL. MITSUBISHI LTD., Setagaya-ku, Tokyo 1580097 (JP); TANAKA, H. c/o SHIN CATERPILLAR MITSUBISHI LTD., Setagaya-ku, Tokyo 1580097 (JP); MIYAKE, K. c/o SHIN CATERPILLAR MITSUBISHI LTD., Setagaya-ku, Tokyo 1580097 (JP); YAMADA, K. c/o SHIN CATERPILLAR MITSUBISHI LTD., Setagaya-ku, Tokyo 1580097 (JP); SAKAI, M. c/o SHIN CATERPILLAR MITSUBISHI LTD., Setagaya-ku, Tokyo 1580097 (JP); YAMASHITA, Y. c/o SEIRYO ENGINEERING CO., LTD., Kobe-shi, Hyogo 6520863 (JP)
(74) Representative: Klingseisen, Franz
(86) International application number: PCT/JP2004/007726
(87) International publication number: WO 2004/113699

(56) References cited:
- EP-A1- 1 630 379
- GB-A- 2 358 165
- JP-A- 11 059 202
- JP-A- 2000 002 115
- JP-A- 2001 055 922
- JP-A- 2001 193 102
- JP-A- 2002 097 951

## Description

### TECHNICAL FIELD

The present invention relates to an engine hood of a construction machine, installed for an opening for maintenance formed in the ceiling surface of the engine room and to an engine room structure and cooling system in a construction machine using that engine hood.

### BACKGROUND ART

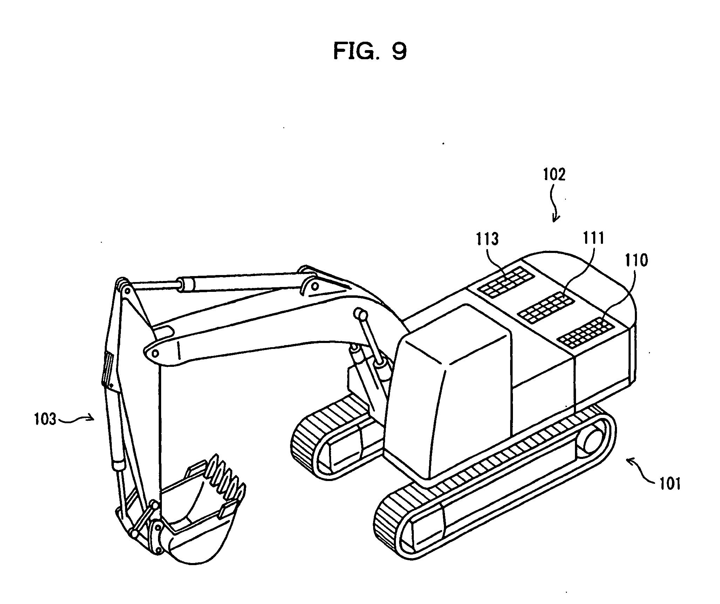

A wide variety of construction machines, such as travel construction machines (excavator, back hoe, hydraulic shovel and wheel loader, etc.), stationary construction machines (folk-lift, crane, etc.), etc., are employed in various fields such as construction sites, harbors, factories, etc. For example, as shown in Fig. 9, a hydraulic shovel (which is a travel construction machine) is made up of three parts: a travel base 101; a revolving superstructure 102 revolvably arranged on the travel base 101; and an operating arm 103 provided on the revolving superstructure 102 to perform various operations.

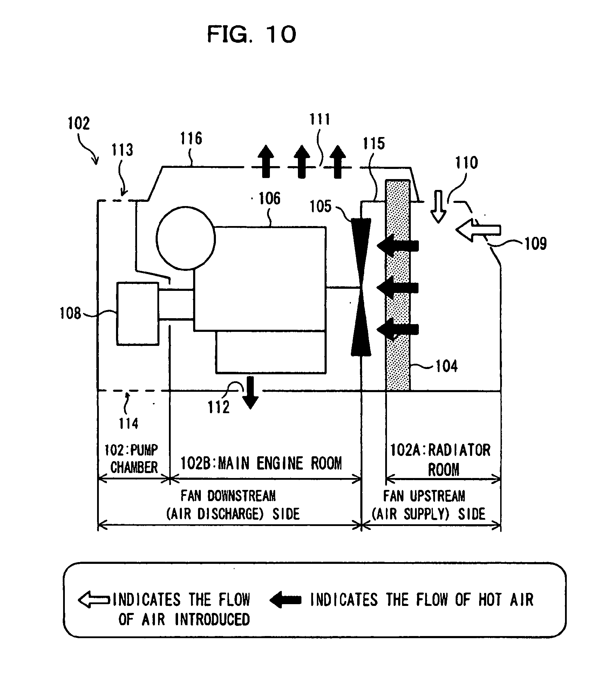

Now, the revolving superstructure 102 will be described with reference to Fig. 10 where the internal construction of a typical engine room is shown. As shown in the figure, the revolving superstructure 102 contains an engine 106, a hydraulic pump 108, etc. The operating arm 103 (see Fig. 9) is operated with the hydraulic pressure produced by the hydraulic pump 108 driven by the engine 106.

Construction machines are typically used in a severe environment, such as digging of stones and rocks in dams, tunnels, rivers, and roads, dismantling of buildings and structures, etc. In such an environment, the load exerted on the engine 106, hydraulic pump 108, and other components is high and can easily cause a rise in engine temperature or working-oil temperature. For this reason, in these construction machines, as shown in Fig. 10, a cooling package 104 comprising a radiator or oil cooler of relatively large capacity is provided in the flow passage where the cooling air generated by the fan 105 driven with the engine 106 flows. And with the cooling package 104, engine cooling water and working oil are cooled (e.g., see Japanese Laid-Open Utility model Publication No. Hei 3-83324 (patent document 1)).

That is, with rotation of the fan 105, air (cooling air) is introduced through the upper openings 109, 110 of a radiator room 102A in which the cooling package 104 is installed. The cooling air cools engine cooling water or working oil when passing through the core of the cooling package 104 of fin structure.

A main engine room 102B has an opening 111 in an engine hood 116 forming part of the ceiling surface thereof and has an opening 112 in the bottom surface, at predetermined positions away from the fan 105 in the fan axial-flow direction (right-and-left direction in Fig. 10). The opening 111 comprises a plurality of openings arranged in the form of a mesh or louver and has a relatively great width in the above-described fan axial-flow direction.

In a pump chamber 102C in which the hydraulic pump 108 is installed, openings 113, 114 are formed in the top surface and bottom surface, respectively. These openings 113, 114 comprise a plurality of openings arranged in the form of a mesh or louver, as with the opening 111 of the main engine room 102B.

The air, cooling the engine cooling water and working oil and reaching a high temperature, is discharged out of the engine room through the discharge openings 111, 112 of the main engine room 102B, or passes through the main engine room 102B and is discharged out of the engine room through the discharge openings 113, 114 of the pump room 102C.

The top surface of the engine room 102 is provided with an opening so that maintenance, such as the inspection, interchange of parts, repair, and cleaning of the cooling package 104, engine 106, and hydraulic pump 108 arranged within the engine room, can be performed. This opening is covered with the aforementioned engine hood 116. This engine hood 116 can be freely opened and shut (That is, the engine hood 116 is pivotally supported by shaft.). In performing the aforementioned maintenance,maintenance operation is performed by opening the engine hood 116.

Construction machines require a large cooling package that has a large heat exchange area and high cooling performance. Typically, as shown in Fig. 10, the upper portion of the cooling package 104 protrudes from an engine room ceiling surface 115. For this reason, the engine hood 116, arranged above the cooling package 104, has a central portion bulging with respect to the engine room ceiling surface 115 so as not to touch with the cooling package 104 (e.g., see "Hydraulic Shovel and Long & Narrow Track 318C LN," Shin Caterpillar Mitsubishi product catalog, May 2002, 4163C1-01, p. 7 (non-patent document 1)).

Particularly, in hydraulic shovels, it has been found that the air flow discharged from the fan 105 includes almost no component in the fan axial-flow direction and that the main components of the air flow are the components in the centrifugal direction and components in the revolving direction (hereinafter referred to as the components in the centrifugal/revolving direction).

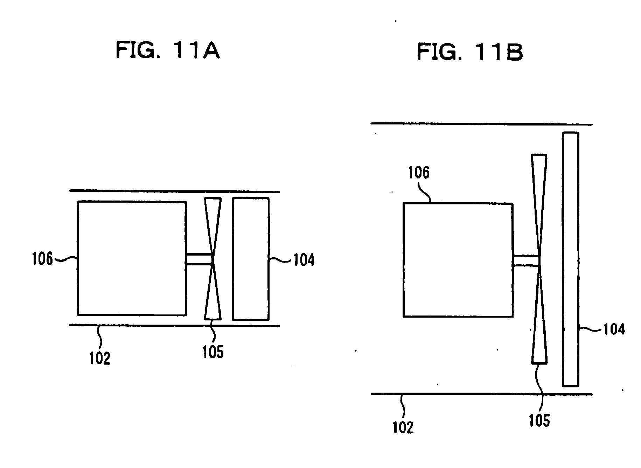

The reasons will hereinafter be described in reference to Figs. 11A to 14B. In the case of hydraulic shovels, the space that can mount a cooling package 104 and an engine in the interior of the revolving superstructure 102 is as shown in Fig. 11A and narrow compared with the space of another construction machine shown in Fig. 11B. Particularly, the cross section perpendicular to the fan axial-flow direction is small. The reason is that if the height of the engine room is increased, the field of vision from a driver's seat in front of the engine room to the rear will be intercepted and that if the width in the fore-and-aft direction of the engine room becomes longer, the construction machine rear end will become great in turning radius and become inconvenient to use in a narrow site.

Thus, the cross section of the engine room in the hydraulic shovel is relatively small, so the thickness of the cooling package 104 is increased to assure the contact area between the cooling package 104 and cooling air and consequently the cooling performance of the cooling package 104. As a result, the pressure resistance that the cooling air undergoes when passing through the cooling package 104 is relatively great.

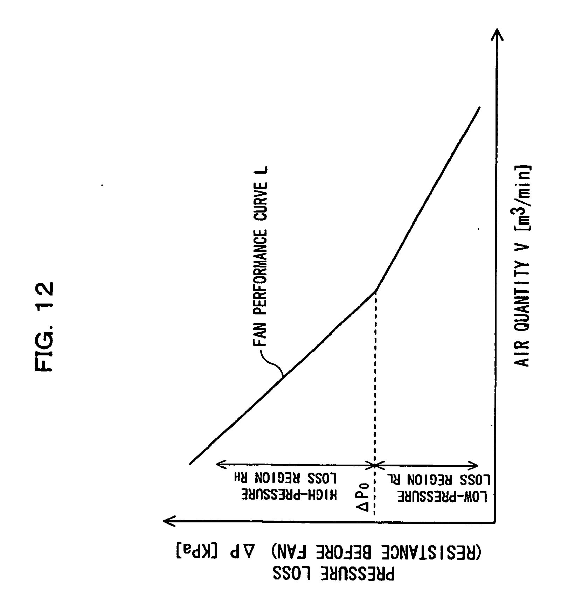

In construction machines, axial fans are typically used to suppress costs and an increase in size. Fig. 12 shows the performance curve of a typical axial fan. As seen in the performance curve L, in axial fans, if the pressure loss Δ P at the fan upstream side increases, an air quantity V per unit time tends to decrease. The air quantity V means an air quantity transferred from the fan upstream side to the fan downstream side, so if the pressure loss ΔP at the fan upstream side increases, an axial flow that is a straight flow from the fan upstream side to the fan downstream side is particularly hard to obtain.

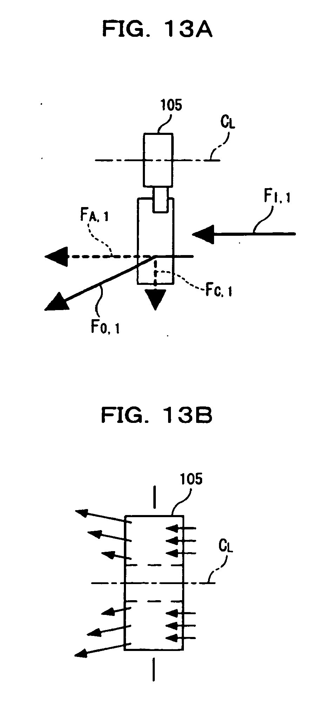

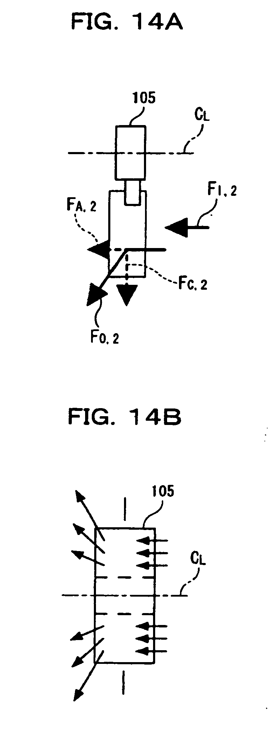

For that reason, when the pressure loss ΔP at the fan upstream side is in a low-pressure loss region R_{L} less than a predetermined value Δ P₀, the flow of the cooling air is as shown in Figs. 13A and 13B. When the pressure loss ΔP at the fan upstream side is in a high-pressure loss region R_{H} equal to or great than the predetermined value Δ P₀, the flow of the cooling air is as shown in Figs. 14A and 14B. (In Figs. 13A to 14B, the right-and-left direction is shown so as to coincide with the fan axial-flow direction, and in Figs. 13A and 14A, only the lower side from the center line C_{L} of the fan is shown.)

That is, in the low-pressure loss region R_{L}, an air quantity is relatively great. Therefore, as shown in Fig. 13A, a relatively great air quantity represented by vector F_{I,1} is generated at the fan upstream side in the axial direction. At the fan downstream side, a flow represented by vector F_{O,1} is generated. That is, the component in the axial-flow direction represented by vector F_{A,1} is greater than the component in the centrifugal/revolving direction represented by vector F_{C,1}. And the air quantity becomes greater toward the centrifugal side, as indicated by vectors in Fig. 13B.

In the high-pressure loss region R_{H}, an air quantity is relatively small. Therefore, as shown in Fig. 14A, a relatively small air quantity represented by vector F_{I,2} is generated at the fan upstream side in the axial direction. At the fan downstream side, a flow represented by vector F_{O,2} is generated. That is, the component in the centrifugal/revolving direction represented by vector F_{C,2} is greater than the component in the axial-flow direction represented by vector F_{A,2}. And the air quantity becomes greater toward the centrifugal side, as indicated by vectors in Fig. 14B.

The above-described relationship between the pressure loss Δ P at the fan upstream side and the flow of the cooling air at the fan downstream side has been confirmed by experiments and simulations.

In the above-described hydraulic shovel, the cooling package is thick and therefore the pressure loss ΔP at the fan upstream side is great. The cooling fan is used in the high-pressure loss region. Therefore, for the flow component of the cooling air at the fan outlet side, the component in the centrifugal/revolving direction will become greater.

However, in the above-described prior art shown in Fig. 10, as described above, the discharge opening 111 comprising a plurality of openings arranged in the form of a mesh is disposed at a position away from the fan 105 in the fan axial-flow direction and has a width in the fan axial-flow direction. Therefore, the cooling air introduced into the main engine room 102B is caused to flow in the axial-flow direction until it is discharged.

That is, in this prior art, air where the main component of the flow is in the centrifugal/revolving direction is caused to flow in the axial-flow direction. For this reason, the pressure loss in the cooling air is relatively great, and consequently, the cooling air passed through the cooling package 104 cannot be smoothly discharged. That is, the discharge efficiency is low.

To enhance the discharge efficiency, the area of the openings in the main engine room 102B can be increased. In this case, noise (leakage of engine sound, or leakage of air sound generated as the cooling air passes through the cooling package 104) will be increased, so that a new problem will arise.

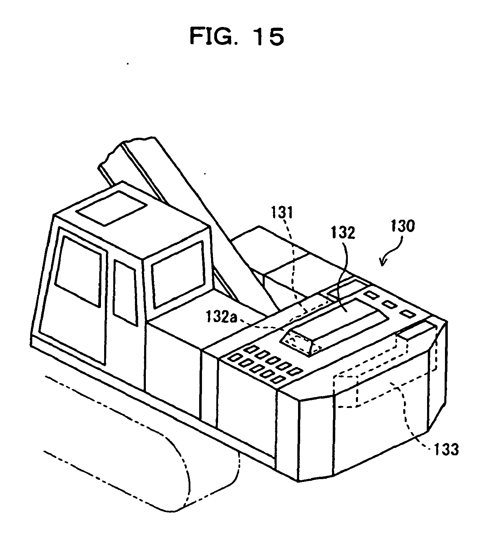

Japanese Laid-Open Patent Publication No. 2001-193102 (patent document 2) discloses a construction machine such as that shown in Fig. 15. In this construction machine, cooling-air passages (fan-air splitting flow passages and fan-air splitting ducts) 131 to 133 are formed in the top surface and side surfaces of an engine room 130. The inlets of the cooling-air passages 131 to 133 (the left ends in Fig. 15) are disposed in the vicinity of the outer periphery of the cooling fan. Such a structure is provided so that the cooling air discharged in the centrifugal/revolving direction from the cooling fan is efficiently discharged from a small number of openings, and so that an increase in the noise from the engine room 130 is prevented.

However, if the duct 132 is provided on the engine room top surface, as in the prior art of the aforementioned patent document 2 shown in Fig. 15, the manufacturing costs, such as material cost and processing cost, for the duct 132 will be increased. In addition, since the opening 132a must be formed in the engine room ceiling surface to communicate the air passage within the duct 132 with the engine room, the processing cost will occur. Thus, the manufacturing costs for a construction machine will be increased.

The present invention has been made in view of the problems mentioned above. Accordingly, it is the object of the present invention to provide an engine hood, engine room structure, and cooling system in a construction machine that are capable of reducing the manufacturing costs while holding the cooling-air discharge efficiency and noise level to a predetermined level.

### DISCLOSURE OF THE INVENTION

To achieve the aforementioned object of the present invention, an engine hood in a construction machine of the present invention is an engine hood installed for an opening for maintenance formed in a ceiling surface of an engine room containing an engine, a cooling package, and a cooling fan. The engine hood includes a hood main body revolvably installed on an outside of the engine room of the ceiling surface so as to cover the opening. The hood main body is formed into a configuration bulging upward in a covering posture where the opening is covered, and has a downstream portion, formed in an axial flow direction of the cooling fan, where a cooling-air discharge port is formed. The engine hood further includes a plate installed inside the bulging configuration of the hood main body, and installed at a position vertically away from a ceiling portion of the hood main body and on an engine room side remote from the discharge port. The plate forms a predetermined gap between an upstream side thereof and the hood main body, and is fixedly installed at a downstream side thereof to the hood main body.

Preferably, the plate is installed in horizontal position.

It is preferable that a rectifying plate be provided along the axial flow direction between the hood main body and the plate.

An engine room structure in a construction machine of the present invention contains an engine, a muffler for deadening sound when exhaust gases are discharged from the engine, a cooling package, and a cooling fan for circulating air for cooling the cooling package, and has an opening for maintenance formed in a ceiling surface. The engine room structure of the present invention comprises the aforementioned engine hood installed on the ceiling surface so as to cover the opening. The engine hood is composed of the hood main body and the plate.

In the engine room structure of the present invention, the engine hood is preferably installed on the ceiling surface so that the aforementioned gap is positioned above the cooling fan.

In the engine room structure of the present invention, a dimension and arrangement, in an axial flow direction of the cooling fan, of the hood main body are preferably set so as to cover the engine and the muffler in the axial flow direction. Also, a dimension and arrangement in the axial flow direction of the plate are preferably set so as to cover the engine and the muffler in the axial flow direction.

In the engine room structure of the present invention, a gas discharge port of the exhaust gas tube is preferably arranged between the hood main body and the plate.

In this case, the aforementioned exhaust gas tube is preferably constructed such that it discharges the exhaust gases in the same direction as the flow of the cooling air between the hood main body and the plate.

A cooling system in a construction machine of the present invention comprises five major parts: (1) an engine room which contains an engine and a muffler for deadening sound when exhaust gases are discharged from the engine, and has an opening for maintenance formed in a ceiling surface; (2) a cooling-air discharge opening formed in the engine room; (3) a cooling fan arranged within the engine room to circulate cooling air; (4) a cooling package arranged within the engine room; and (5) the aforementioned engine hood installed on the ceiling surface so as to cover the opening for maintenance. The engine hood is composed of the hood main body and the plate.

In the cooling system of the present invention, the engine hood is preferably installed on the ceiling surface so that the aforementioned gap is positioned above the cooling fan.

In the cooling system of the present invention, a dimension and arrangement, in an axial flow direction of the cooling fan, of the hood main body are preferably set so as to cover the engine and the muffler in the axial flow direction.

Also, a dimension and arrangement in the axial flow direction of the cooling fan, of the plate are preferably set so as to cover the engine and the muffler in the axial flow direction.

In the cooling system of the present invention, a gas discharge port of the exhaust gas tube is preferably arranged between the hood main body and the plate.

In the cooling system of the present invention, the exhaust gas tube is preferably constructed such that it discharges the exhaust gases in the same direction as the flow of the cooling air between the hood main body and the plate.

According to the present invention, the engine hood comprises a bulging hood main body revolvably installed on the outside of the engine room so as to cover an opening for maintenance formed in the ceiling surface of the engine room, and a plate installed inside the bulging configuration of the hoodmain body. A cool ing-air passage is formed between the hood main body and the plate.

The cooling-air passage has as its inlet the gap formed in the fan axial-flow direction between the upstream surface of the hood main body and the plate and positioned above the cooling fan. The cooling-air passage also has as its outlet the cooling-air discharge opening formed in the downstream portion, in the fan axial-flow direction, of the hood main body. As a result, the cooling air discharged in the centrifugal direction, which occupies most of the cooling air discharged from the cooling fan, smoothly flows into the cooling-air passage through the aforementioned inlet formed above the cooling fan. The cooling air is further guided by the cooling-air passage and is smoothly discharged out of the engine room. Thus, the cooling-air discharge efficiency can be enhanced.

In addition, since the engine sound leaking through the cooling-air passage is deflected in the horizontal direction of the construction machine, the spreading of the noise can be easily inhibited.

The aforementioned effects can be realized with a simple construction such as the plate secured to the hood main body corresponding to the conventional engine hood. As a result, the costs for manufacturing a construction machine can be reduced while maintaining the cooling-air discharge efficient and noise level to a predetermined level.

### BRIEF DESCRIPTION OF THE DRAWINGS

FIG. 1 is a perspective view showing a construction machine relating to a first embodiment of the present invention;
FIG. 2 is a transverse sectional view showing an engine hood used in the construction machine, an engine room structure used in the construction machine, and a cooling system used in the construction machine, according to the first embodiment of the present invention (white arrows indicate the flow of air introduced and black arrows indicate the flow of hot air);
FIG. 3 is a perspective view showing the engine hood and engine room of the construction machine relating to the first embodiment of the present invention;
FIG. 4 is a perspective view, partly broken away, showing the engine hood of the construction machine relating to the first embodiment of the present invention;
FIG. 5 is a side view showing the revolving superstructure relating to the first embodiment of the present invention;
FIG. 6 is a transverse sectional view showing the principal part of an engine hood, an engine room structure, and a cooling system used in a construction machine according to a second embodiment of the present invention;
FIG. 7 is a transverse sectional view showing the principal part of a modification of the engine hood, engine room structure, and cooling system of the second embodiment of the present invention;
FIG. 8 is a transverse sectional view showing the principal part of an engine hood, an engine room structure, and a cooling system used in a construction machine according to a third embodiment of the present invention;
FIG. 9 is a perspective view showing a conventional construction machine;
FIG. 10 is a transverse sectional view showing the engine room of the conventional construction machine (white arrows indicate the flow of air introduced and black arrows indicate the flow of hot air);
FIG. 11A is a schematic diagram used to explain the relationship between the size of an engine room and the thickness of a cooling package in the cooling system of a construction machine, the engine roombeing relatively narrow;
FIG. 11B is a schematic diagram used to explain the relationship between the size of an engine room and the thickness of a cooling package in the cooling system of another construction machine, the engine room being relatively wide;
FIG. 12 is a schematic diagram showing the performance curve of a typical axial cooling fan;
FIG. 13A is a schematic diagram showing how cooling air flows before and after the cooling fan when pressure loss at the upstream side is relatively small;
FIG. 13B is a schematic diagram showing how cooling air flows before and after the cooling fan when pressure loss at the upstream side is relatively small;
FIG. 14A is a schematic diagrams showing how cooling air flows before and after the cooling fan when pressure loss at the upstream side is relatively great;
FIG. 14B is a schematic diagrams showing how cooling air flows before and after the cooling fan when pressure loss at the upstream side is relatively great; and
FIG. 15 is a perspective view showing the cooling system of another conventional construction machine.

### BEST MODE FOR CARRYING OUT THE INVENTION

Embodiments of the present invention will hereinafter be described in reference to the drawings.

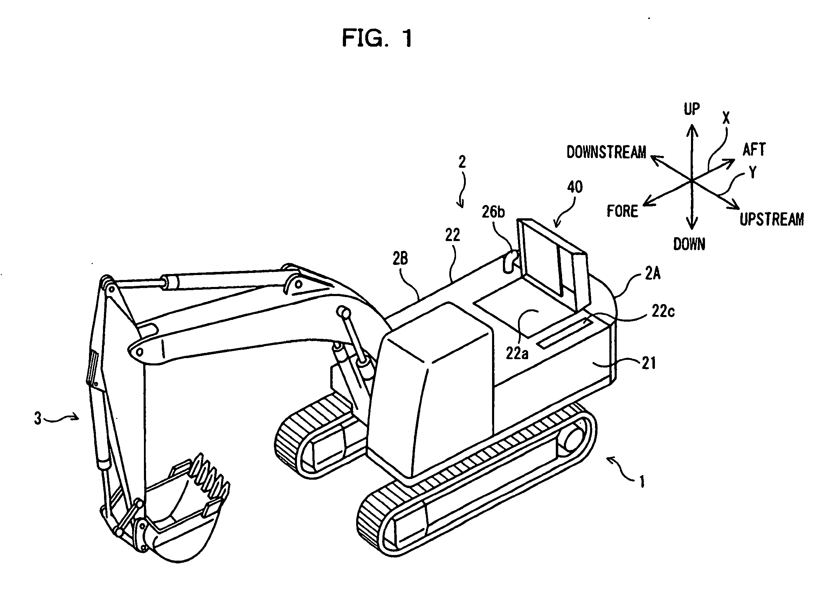

In Figs. 1 to 8, an arrow X indicates the fore-and-aft direction of a construction machine (also referred to as an engine room width direction), and an arrow Y indicates the right-and-left direction of the construction machine (also referred to as a fan axial-flow direction).

Also, in the following embodiments, a description will be given in the case where the present invention is applied to a hydraulic shovel (construction machine).

### (1) First Embodiment

A construction machine to which an engine hood, an engine room structure, a cooling system as a first embodiment of the present invention are applied will be described in reference to Fig. 1. The figure is a perspective view showing the entire construction machine relating to the first embodiment of the present invention.

The construction machine is made up of three parts: a travel base 1; a revolving superstructure 2 revolvably disposed on the travel base 1; and an operating arm 3, provided on the revolving superstructure 2, for performing various operations. The revolving superstructure 2 has a counterweight 2A disposed at its rear end, and an engine room 2B disposed in front of the counterweight 2A. Also, the ceiling surface of the revolving superstructure 2 is provided with an opening 22a so that maintenance can be performed on equipment installed within the engine room 2B. The ceiling surface is further provided with an engine hood 40 for covering or uncovering the opening 22a. In Fig. 1, the engine hood 40 is held in an uncovering posture where the opening 22a is uncovered.

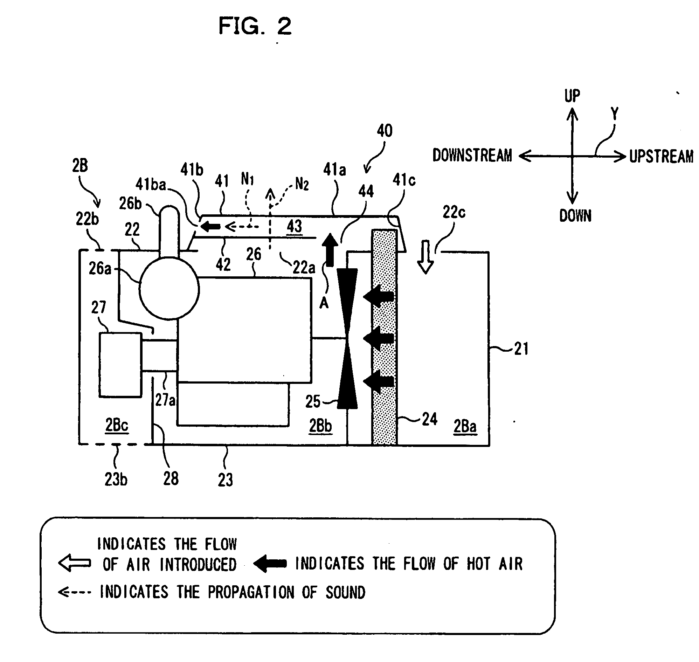

Now, the structure of the engine room 2B according to the first embodiment of the present invention will be described in reference to Fig. 2. The figure is a transverse sectional view showing the engine room 2B. In the engine room 2B, an engine 26 is installed so its crank shaft is directed in the right-and-left direction Y. An axial cooling fan 25 is disposed to the right side of the engine 26. The cooling fan 25 is installed so its axial direction coincides with the right-and-left direction Y, and is used to deliver cooling air into a cooling-air passage defined by the interior space of the engine room 2B. In the embodiment shown in Fig. 2, cooling air is delivered toward the left side. The cooling fan 25 shown in Fig. 2 is an engine-driven type mechanically coupled with the engine crank shaft, but may be a hydraulic type.

The engine room 2B also houses a muffler 26a, which has a center axis extending in the fore-and-aft direction X of the construction machine (perpendicular to the paper surface of Fig. 2). The exhaust gases discharged from the engine 26 are silenced by this muffler 26a and are discharged out of the engine room 2B through an exhaust gas tube 26b, connected to the muffler 26a and penetrating the engine room ceiling surface 22.

A cooling package 24, such as a radiator, an oil cooler, etc., is installed on the upstream side (right side of Fig. 2) in the axial-flow direction of the cooling fan 25. Also, a hydraulic pump 27, mechanically coupled with the engine crank shaft, is installed on the downstream side (left side of Fig. 2) in the axial-flow direction of the cooling fan 25.

The interior of the engine room 2B is partitioned between the cooling package 24 and engine 26, also between engine 26 and hydraulic pump 27. That is, the interior of the engine room 2B is divided into a radiator room 2Ba where the radiator (cooling package 24) is installed, a main room (hereinafter referred to as a main engine room) 2Bb where the engine 26 and cooling fan 25 are installed, and a pump room 2Bc where the hydraulic pump 27 is installed.

As described above, the ceiling surface 22 of the engine room 2B has the relatively large opening 22a. In this embodiment, the opening 22a is arranged on the upstream side in the fan axial-flow direction of the muffler 26a and exhaust gas tube 26b. This opening 22a makes it possible to perform maintenance such as the inspection, interchange of parts, repair, and cleaning of the cooling package 24, cooling fan 25, and engine 26 arranged within the engine room 2B. And the engine hood 40 as the first embodiment of the present invention is installed for the opening 22a.

The engine hood 40 comprises a hood main body 41, and a plate 42 secured to the inner side of the hood main body 41.

The hood main body 41 is connected to the outer side of the ceiling surface 22 through hinges (not shown) and revolvable up and down on the hinges, between a covering posture (shown in Fig. 2) where the main surface 41a is held horizontally so as to cover the opening 22a and an uncovering posture (shown in Fig. 1) where the main surface 41a is tilted up so as to uncover the opening 22a. That is, the hood main body 41 is pivotally supported by hinges. The cooling package 24 is relatively large and the upper end thereof projects from the engine room ceiling surface 22. The central portion (main surface) 41a of the hood main body 41 is bulged with respect to the engine room ceiling surface 22 so that it does not touch with the cooling package 22 even in the aforementioned covering posture. The hood main body 41 also has a discharge port 41ba formed in the downstream surface 41b in the fan axial-flow direction of the hood main body 41.

On the other hand, the plate 42 is secured to the inside of the hood main body 41 so that it assumes a horizontal posture in the above-described covering posture. The plate 42 also forms a gap 44 in the fan axial-flow direction Y is formed between the inner wall surface 41c on the upstream side of the hood main body 41 and the upstream edge portion of the opening 22a. This forms a cooling-air passage 43 having the gap 44 as an inlet and the discharge port 41ba as an outlet. In the covering posture of the hood 40, the gap 44 is arranged near the outer periphery of the cooling fan 25. That is, the gap 44 is arranged at the same, or approximately the same, position as the cooling fan 25 in the fan axial-flow direction Y. In this embodiment, the gap 40 is positioned directly below the cooling fan 25 with respect to the fan axial-flow direction Y.

In the above-described engine room structure, if the cooling fan 25 is operated, air (cooling air) is introduced into the engine room 2B (cooling-air passage) through the introduction opening 22c and is passed through the cooling package 24. Thereafter, the cooling air is guided to the discharge port 41ba through the air passage 43 formed between the hood main body 41 and the plate 42 and is discharged out of the engine room 2B. The cooling water and the working oil of the hydraulic pump 27, flowing through the cooling package 24, are cooled by the cooling air as it passes through the core of the cooling package 24.

That is, the cooling system of the first embodiment comprises the engine room introduction opening 22c, cooling-air passage (chambers 2Ba, 2Bb, and 2Bc within the main body 21), cooling package 24, cooling fan 25, and engine hood 40.

Note that part of the cooling air introduced into the engine room 2B slightly flows into the pump room 2Bc through the gap between the connecting rod 27a (which extends between the engine 26 and hydraulic pump 27) and the partition wall 28 (which is disposed between the main engine room 2Bb and pump room 2Bc) . For this reason, the top wall surface 22 and bottom wall surface 23, which face the pump room 2Bc, are provided with auxiliary openings 22b and 23b in the form of a mesh. The cooling air flowing in the pump room 2Bc is discharged out of the engine room 2B through the openings 22b and 23b.

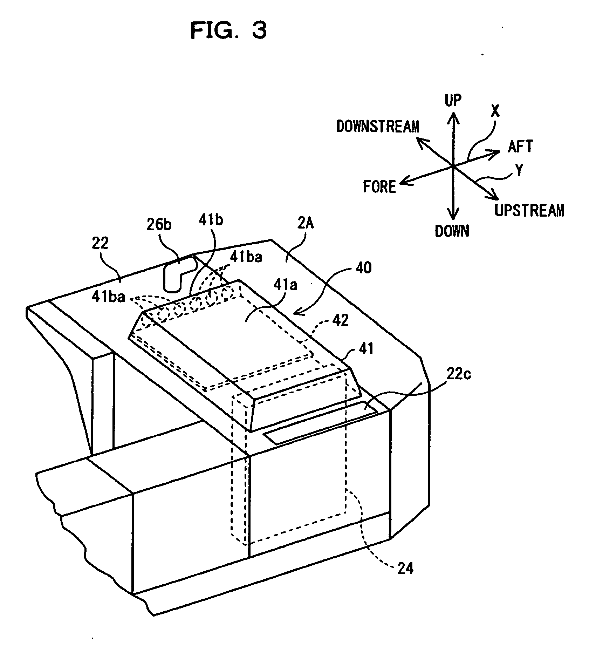

Now, the introduction opening 22c and the engine hood will be described in further detail in reference to Figs. 3 to 5.

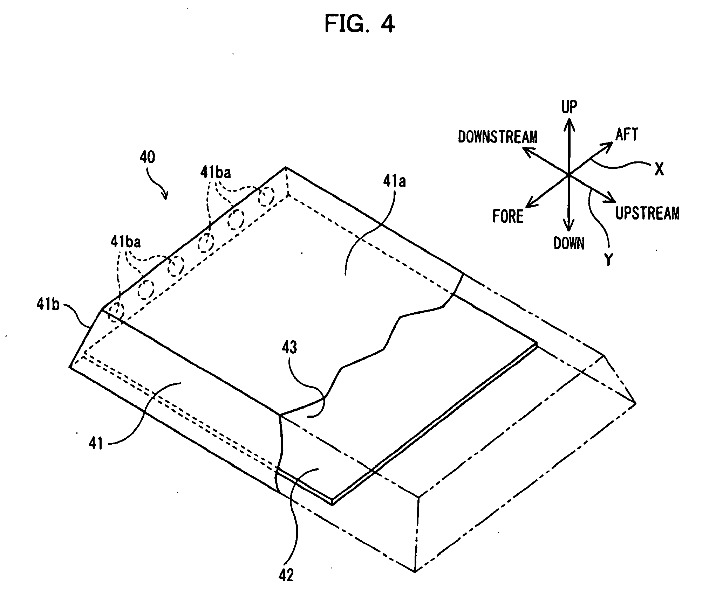

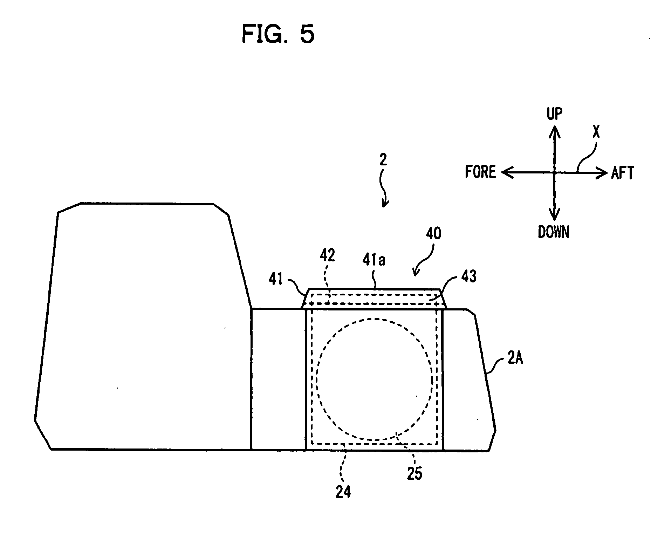

Fig. 3 is a perspective view showing the upper portion of the engine room 2B, Fig. 4 is a perspective view, partly broken away, of the engine hood, and Fig. 5 is a side view of the engine room 2B.

The introduction opening 22c is formed as a slit opening that is elongate in the engine room width direction X. Also, the engine hood 40 comprises the hood main body 41 and the plate 42 secured to the inside of the hood main body 41, as described above. The central portion (main surface) 41a of the hood main body 41 is formed into a bulged shape, as described above. In this embodiment, the hood main body 41 is approximately trapezoidal in cross section and has a contour in the form of approximately a box. The downstream surface 41b in the fan axial-flow direction Y of the hood main body 41 has a plurality of discharge openings 41ba that are relatively short in the engine room width direction X (e.g., circular openings in this embodiment). The discharge openings 41ba are arranged side by side along the engine room width direction X.

The plate 42 is secured to the hood main body 41 at a position a predetermined vertical distance away from the main surface 41a of the hood main body 41 in parallel with the main surface 41a. The downstream side in the fan axial-flow direction Y of the plate 42, and the both sides in the engine room width direction of the plate 42, are secured to the inner wall surfaces of the hood main body 41. Also, the length in the fan axial-flow direction Y of the plate 42 is set smaller than that of the hood main body 41. As described above, the gap 44 is formed between the hood main body 41 and the plate 42.

Since the engine hood, engine room structure, and cooling system of the first embodiment of the present invention are constructed as described above, cooling air is discharged out of the engine room 2B, as shown in Fig. 2.

That is, as previously described in the prior art, there is typically a relatively great loss at the cooling package 24, so the cooling air sent out of the cooling fan 25 flows as indicated by an arrow A. The main component of the flow of the cooling air sent out of the cooling fan 25 is the component in the centrifugal/revolving direction. That is, most of the cooling air sent out of the cooling fan 25 flows in approximately the centrifugal direction, as indicated by the arrow A.

Hence, in the cooling system of the first embodiment, the inlet 44 of the air passage 43 formed by the engine hood 40 is formed in a portion of the top wall surface of the engine room 2B which is struck by the cooling air sent out from the cooling fan 25. Therefore, the cooling air sent out of the cooling fan 25 flows into the air passage 43 formed between the hood main body 41 and plate 42 of the engine hood 40 without undergoing direct resistance, and is smoothly discharged out of the engine room 2B while being guided by the air passage 43. Thus, the cooling-air discharge efficiency can be enhanced.

As a result, the open area of the engine room 2B can be reduced, whereby leakage of engine sound and air sound produced by the cooling air passing through the cooling package 24 (hereinafter referred to as engine sound) can be inhibited. That is, leakage of noise can be inhibited. In addition, since the pressure loss of the cooling air can be reduced, costs can be reduced by relaxing specifications for the cooling fan 25. Furthermore, the cooling-air discharge efficiency is enhanced, so even if the cooling fan 25 of the same specifications is used, the air quantity can be increased and specifications for the heat exchange area of the cooling package 24 can be relaxed.

In addition, the cooling air discharged out of the engine room 2B can be guided by the air passage 43 formed by the engine hood 40, also can be deflected in the horizontal direction, and can be smoothly discharged out of the engine room 2B. Furthermore, the engine sound leaking out of the engine room 2B through the air passage 43 in the horizontal posture will propagate in the horizontal direction, as indicated by a broken arrow N₁.

The noise produced horizontally by a construction machine can be inhibited, for example, by enclosing a working site with a shielding. However, providing a shielding to inhibit the noise vertically produced is a large-scale operation and not practical. In addition, part of the noise horizontally produced is absorbed by buildings, the ground, etc., but since there is no object to absorb the noise vertically produced, the vertical noise can propagate widely.

Therefore, if the propagation direction of the noise is deflected in the horizontal direction, the propagation range can be narrowed (spreading of the noise can be inhibited).

The engine sound propagating through the air passage 43 in the direction of arrow N₁ can be absorbed and attenuated by the hood main body 41 and plate 42 that form the air passage 43. The length in the fan axial-flow direction Y of the air passage 43 (i.e., the axial length from the upstream end of the plate 42 to the discharge hole 41ba of the hood main body 41) is set so that the engine-sound reducing effect by the inner wall surfaces of the hood main body 41 and plate 42 is sufficiently obtained (e.g., so that the engine sound becomes smaller than a predetermined value).

Part of the engine sound is transmitted through the plate 42 and hood main body 41 in the direction indicated by an arrow N₂ in Fig. 2, but is attenuated by the plate 42 and hood main body 41. That is, the engine sound propagating in the direction indicated by the arrow N₂ is attenuated by two wall surfaces: the plate 42 and the hood main body 41.

In the prior art shown in Fig. 15, for enhancing the cooling-air discharge effect and the noise level, the duct 132 is provided in the top surface of the engine room, and also the opening 132a is provided in the ceiling surface of the engine room to communicate the engine room with the air passage formed inside the duct 132. The engine hood 40 of this embodiment makes use of the fact that in construction machines, the engine hood has a configuration bulging with respect to the engine room ceiling surface. With a simple structure such as the plate 42 secured to the inside of the hood main body 41 equivalent to conventional engine hoods, the aforementioned duct and engine room opening in the prior art shown in Fig. 15 can be formed together by the engine hood 40. Therefore, compared with the aforementioned prior art, the cost for manufacturing a construction machine can be reduced while maintaining the cooling-air discharge effect and the noise level.

### (2) Second Embodiment

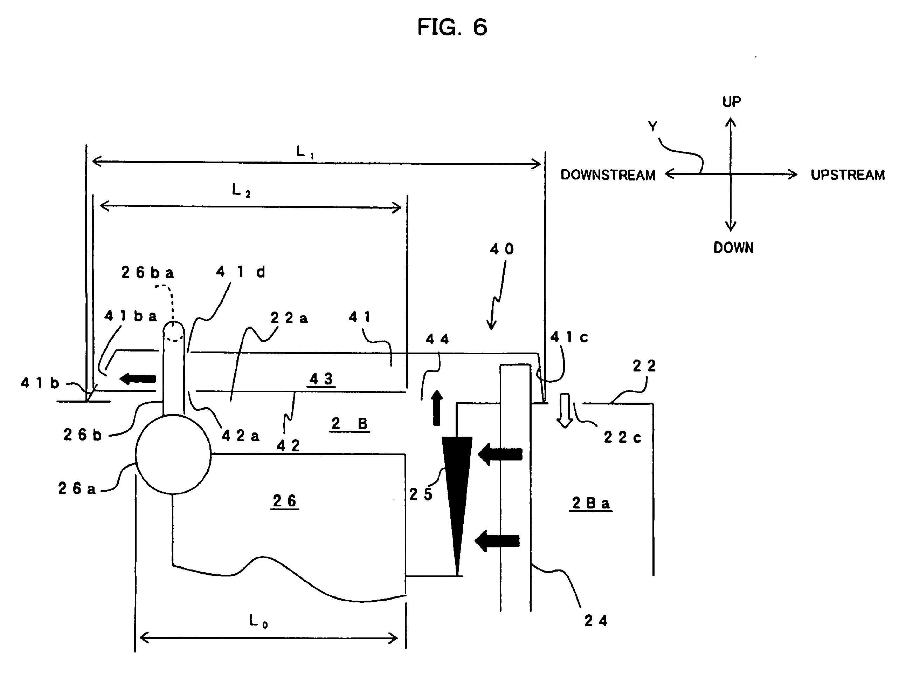

An engine hood, an engine room structure, and a cooling system according to a second embodiment of the present invention will be described in reference to Fig. 6. The figure is a transverse sectional view showing the principal part of the engine hood, engine room structure, and cooling system of the second embodiment of the present invention. Note that the parts described in the aforementioned first embodiment are given the same reference numerals and therefore a description of the same parts is omitted.

In the above-described first embodiment, the maintenance opening 22a in the engine room ceiling surface 22 and the engine hood 40 are arranged on the upstream side in the fan axial-flow direction of the muffler 26a and exhaust gas tube 26b, but in the second embodiment, the engine hood 40 extends to the downstream side in the fan axial-flow direction of the muffler 26a and exhaust gas tube 26b. Also, the lengths L₁ and L₂ in the fan axial-flow direction Y of the hood main body 41 and plate 42 are set so that they cover the engine 26 and muffler 26a in the fan axial-flow direction Y. That is, the lengths L₁ and L₂ are set equal to or greater than the length L₀ of an aggregation of the engine 26 and muffler 26a (L₁ ≧ L₀ and L₂ ≧ L₀). At the same time, the hood main body 41 is arranged so that a region defined by the length L₁ contains a region defined by the length L₀. Similarly, the plate 42 is arranged so that a region defined by the length L₂ contains the region defined by the length L₀.

In the second embodiment, the maintenance opening 22a in the engine room ceiling surface 22 also extends to the downstream side in the fan axial-flow direction of the muffler 26a and exhaust gas tube 26b.

The exhaust gas tube 26b penetrates the hood main body 41 and plate 42 upward in the vertical direction of the engine room 2B, and the gas discharge port 26ba thereof is arranged out of the engine room 2B. The exposed portion of the exhaust gas tube 26b is bent rearward so that exhaust gases are discharged rearward from the gas discharge port 26ba.

The hood main body 41 and plate 42 have holes 41d and 42a for inserting the exhaust gas tube 26b. The holes 41d and 42a are formed in a sufficiently large size so that they do not abut the exhaust gas tube 26b in the covering posture, uncovering posture, and intermediate posture (between the covering and uncovering postures) of the engine hood 40. Since the remaining constitution is the same as the first embodiment, a description of the same parts is omitted.

Because the engine hood, engine room structure, and cooling system of the second embodiment of the present invention are constructed as described above, the radial noise produced due to the vibration of the muffler 26a is doubly intercepted in the vertical direction by the hood main body 41 and plate 42. Thus, the noise can be more effectively prevented.

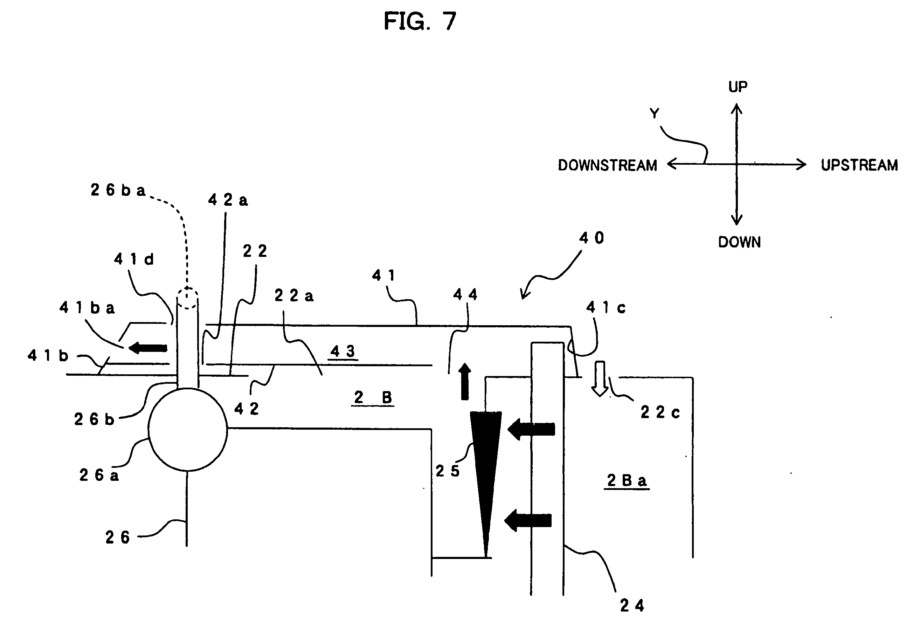

In the second embodiment, the maintenance opening 22a in the engine room ceiling surface 22 extends to the downstream side in the fan axial-flow direction of the muffler 26a and exhaust gas tube 26b. However, as shown in Fig. 7, the maintenance opening 22a may extend to the upstream side in the fan axial-flow direction of the muffler 26a and exhaust gas tube 26b, as with the first embodiment.

In this case, three wall surfaces (engine room ceiling surface 22, hood main body 41, and plate 42) are vertically arranged along the muffler 26a, so the noise produced by the muffler 26a can be even more effectively inhibited.

### (3) Third Embodiment

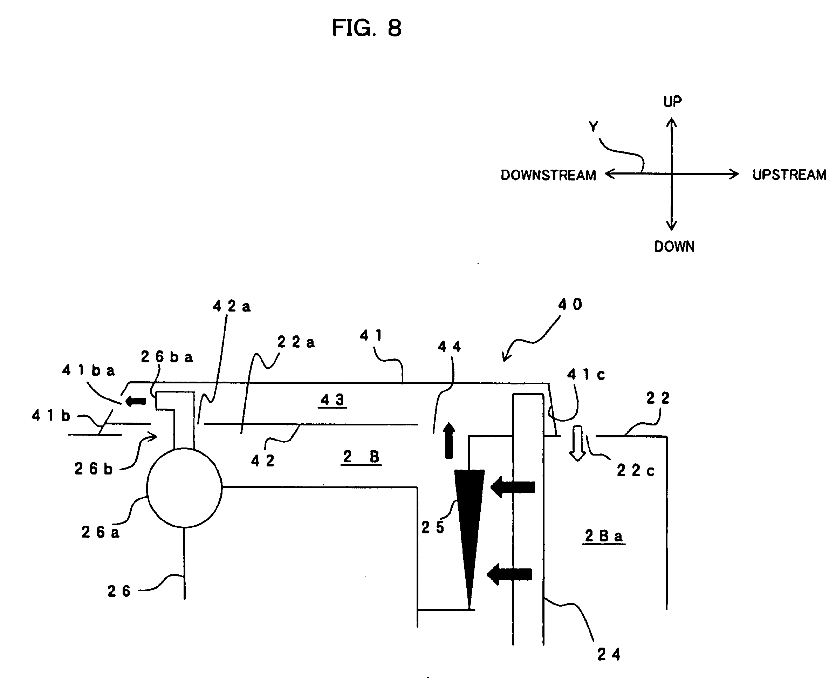

An engine hood, an engine room, and a cooling system in a construction machine of a third embodiment of the present invention will be described in reference to Fig. 8.

Fig. 8 is a transverse sectional view showing the principal part of an engine room 2B. Note that the parts already described in the aforementioned embodiments are given the same reference numerals.

In the third embodiment of the present invention, the configuration of the exhaust gas tube 26b and the peripheral construction differ from the first embodiment, as shown in Fig. 8.

That is, in the above-described second embodiment, the exhaust gas tube 26b penetrates the hood main body 41 and plate 42, and the gas discharge port 26ba thereof is arranged out of the engine room. However, in the third embodiment, as shown in Fig. 8, the exhaust gas tube 26b penetrates only the plate 42 upward in the vertical direction and the gas discharge port 26ba thereof is arranged in the air passage 43 formed between the hood main body 41 and the plate 42. The gas discharge port 26ba is also bent toward the downstream side in the fan axial-flow direction of the air passage 43. Because the remaining construction is the same as the first embodiment, a description of the same parts is omitted.

Since the engine hood, engine room, and cooling system of the third embodiment of the present invention are thus constructed, the cooling-air discharge efficiency can be enhanced by the ejector effect.

That is, the flow speed V_{G} of the exhaust gases discharged from the exhaust gas tube 26b is typically faster than the flow speed V_{A} of the cooling air flowing through the air passage 43 (V_{G} > V_{A}), so the discharge of the cooling air from the air passage 43 is pulled by the flow of exhaust gases. In this manner, the cooling-air discharge efficiency can be enhanced. If the cooling-air discharge efficiency is enhanced, costs can be reduced by relaxing specifications for the cooling fan 25.

### (4) Others

While the present invention has been described with reference to the preferred embodiments thereof, the invention is not to be limited to the details given herein, but may be modified within the scope of the invention hereinafter claimed.

For example, between the hood main body 41 and the plate 42, a plurality of partition plates (rectifying plates) may be provided along the fan axial-flow direction Y between a plurality of discharge holes 41ba formed in the hood main body 41 so that they do not interfere with the exhaust gas tube 26b. This prevents the cooling air from flowing in the engine room width direction X. As a result, the cooling air can smoothly flow toward the discharge holes 41ba and the back pressure of the cooling air can be reduced.

In addition, the downstream surface 41b in the fan axial-flow direction of the hood main body 41 may have a single opening that is relatively elongate in the engine room width direction X. Similarly, a plurality of partition plates (rectifying plates) may be provided along the fan axial-flow direction Y between the hood main body 41 and the plate 42 so that the inside of the hood main body 41 is divided into a plurality of parts in the engine room width direction X.

## Claims

1. An engine hood in a construction machine that is installed for covering and uncovering an opening (22a) for maintenance formed in a ceiling surface (22) of an engine room (2B) containing an engine (26), a cooling package (24), and a cooling fan (25), said engine hood comprising:
a hood main body (41) revolvably installed on an outside of the engine room (2B) of said ceiling surface (22) so as to cover and uncover said opening (22a), said hood main body (41) being formed into a configuration bulging upward in a covering posture where said opening (22a) is covered and also having a downstream portion, formed in an axial flow direction (Y) of said cooling fan (25), where a cooling-air discharge port (41ba) is formed; and
a plate (42) installed inside the bulging configuration of said hood main body (41), and installed at a position vertically away from a ceiling portion of said hood main body (41) and on an engine room (2B) side remote from said discharge port (41ba);
Wherein said plate (42) forms a predetermined gap (44) between an upstream side thereof and said hood main body (41), and is fixedly installed at a downstream side thereof to said hood main body (41).

2. The engine hood as set forth in claim 1, wherein a rectifying plate is provided along said axial flow direction (Y) between said hood main body (41) and said plate (42).

3. An engine room structure in a construction machine which contains an engine (26), a muffler (26a) for deadening sound when exhaust gases are discharged from said engine (26), a cooling package (24), and a cooling fan (25) for circulating air for cooling said cooling package (24), andwhichhasanopening (22a) forbmaintenance formed in a ceiling surface (22), said engine room structure comprising:
the engine hood (40) as set forth in claim 1 or 2, installed on said ceiling surface (22) so as to cover and uncover said opening (22a), said engine hood (40) being composed of the hood main body (41) and the plate (42).

4. The engine room structure as set forth in claim 3, wherein said engine hood (40) is installed on said ceiling surface (22) so that the gap (44) as set forth in claim 1 is positioned above said cooling fan (25).

5. The engine room structure as set forth in claim 3 or 4, wherein
a dimension and arrangement, in an axial flow direction (Y) of said cooling fan (25), of said hood main body (41) are set so as to cover said engine (26) and said muffler (26a) in said axial flow direction (Y); and
a dimension and arrangement in said axial flow direction (Y) of said plate (42) are set so as to cover said engine (26) and said muffler (26a) in said axial flow direction (Y).

6. The engine room structure as set forth in claim 5, wherein a gas discharge port (26ba) of said exhaust gas tube (26b) is arranged between said hood main body (41) and said plate (42).

7. The engine room structure as set forth in claim 6, wherein said exhaust gas tube (26b) is constructed such that it discharges said exhaust gases in the same direction as the flow of the cooling air between said hood main body (41) and said plate (42).

8. A cooling system in a construction machine comprising:
an engine room (2B) which contains an engine (26) and a muffler (26a) for deadening sound when exhaust gases are discharged from said engine (26), and has an opening (22a) for maintenance formed in a ceiling surface (22);
a cooling-air discharge opening formed in said engine room (2B);
a cooling fan (25) arranged within said engine room (2B) to circulate cooling air;
a cooling package (24) arranged within said engine room (2B); and
the engine hood (40) as set forth in claim 1 or 2, installed on said ceiling surface (22) so as to cover and uncover said opening (22a) for maintenance, said engine hood (40) being composed of the hood main body (41) and the plate (42).

9. The cooling system as set forth in claim 8, wherein said engine hood (40) is installed on said ceiling surface (22) so that the gap (44) as set forth in claim 1 is positioned above said cooling fan (25).

10. The cooling system as set forth in claim 8 or 9, wherein a dimension and arrangement, in an axial flow direction (Y) of said cooling fan (25), of said hood main body (41) are set so as to cover said engine (26) and said muffler (26a) in said axial flow direction (Y).

11. The cooling system as set forth in claim 10, wherein a dimension and arrangement in said axial flow direction (Y) of said cooling fan (25), of said plate (42) are set so as to cover said engine (26) and said muffler (26a) in said axial flow direction (Y).

12. The cooling system as set forth in claim 10 or 11, wherein a gas discharge port (26ba) of said exhaust gas tube (26b) is arranged between said hood main body (41) and said plate (42).

13. The cooling system as set forth in claim 12, wherein said exhaust gas tube (26b) is constructed such that it discharges said exhaust gases in the same direction as the flow of said cooling air between said hood main body (41) and said plate (42).

## Patentansprüche

1. Motorhaube in einer Baumaschine, die zum Abdecken und Aufdecken einer Öffnung (22a) zur Wartung eingebaut ist, welche in einer Deckenoberfläche (22) eines Motorraums (2B) ausgebildet ist, der einen Motor (26), eine Kühleinheit (24) und einen Kühllüfter (25) enthält, wobei die Motorhaube umfasst:
einen Haubenhauptkörper (41), der drehbar auf einem Äußeren des Motorraums (2B) der Deckenoberfläche (22) angebracht ist, um so die Öffnung (22a) abzudecken und aufzudecken, wobei der Haubenhauptkörper (41) in einer Gestaltung ausgebildet ist, welche sich nach oben in einer abdeckenden Stellung ausbaucht, in welcher die Öffnung (22a) abgedeckt wird, und ebenso aufweisend einen stromabwärtigen Abschnitt, der in einer axialen Strömungsrichtung (Y) des Kühllüfters (25) ausgebildet ist, wo eine Kühlluft-Abgabeöffnung (41 ba) ausgebildet ist; und
eine Platte (42), die innerhalb der ausbauchenden Gestaltung des Haubenhauptkörpers (41) angebracht ist, und an einer Position vertikal entfernt von einem Deckenabschnitt des Haubenhauptkörpers (41) und auf einer Motorraum (2B) -seite, entfernt von der Abgabeöffnung (41 ba), angebracht ist;
wobei die Platte (42) einen vorbestimmten Spalt (44) zwischen einer stromaufwärtigen Seite davon und dem Haubenhauptkörper (41) ausbildet und fest an einer stromabwärtigen Seite davon an dem Haubenhauptkörper (41) angebracht ist.

2. Motorhaube nach Anspruch 1, wobei eine Begradigungsplatte entlang der axialen Strömungsrichtung (Y) zwischen dem Haubenhauptkörper (41) und der Platte (42) vorgesehen ist.

3. Motorraumstruktur in einer Baumaschine, welche einen Motor (26), einen Dämpfer (26a) zur Geräuschdämpfung, wenn Abgase von dem Motor (26) abgegeben werden, eine Kühleinheit (24) und einen Kühllüfter (25) zum Zirkulieren von Luft zum Kühlen der Kühleinheit (24) enthält, und welche eine Öffnung (22a) zur Wartung aufweist, die in einer Deckenoberfläche (22) ausgebildet ist, wobei die Motorraumstruktur umfasst:
die Motorhaube (40) nach Anspruch 1 oder 2, angebracht auf der Deckenoberfläche (22), um so die Öffnung (22a) abzudecken und aufzudecken, wobei die Motorhaube (40) mit dem Haubenhauptkörper (41) und der Platte (42) gebildet ist.

4. Motorraumstruktur nach Anspruch 3, wobei die Motorhaube (40) auf der Deckenoberfläche (22) so angebracht ist, dass der Spalt (44) nach Anspruch 1 oberhalb des Kühllüfters (25) positioniert ist.

5. Motorraumstruktur nach Anspruch 3 oder 4, wobei
eine Dimensionierung und Anordnung in einer axialen Strömungsrichtung (Y) des Kühllüfters (25) des Haubenhauptkörpers (41) so gewählt sind, dass der Motor (26) und der Dämpfer (26a) in der axialen Strömungsrichtung (Y) abgedeckt werden; und
eine Dimensionierung und Anordnung in der axialen Strömungsrichtung (Y) der Platte (42) so gewählt sind, dass der Motor (26) und der Dämpfer (26a) in der axialen Strömungsrichtung (Y) abgedeckt sind.

6. Motorraumstruktur nach Anspruch 5, wobei eine Gasabgabeöffnung (26ba) des Abgasrohrs (26b) zwischen dem Haubenhauptkörper (41) und der Platte (42) angeordnet ist.

7. Motorraumstruktur nach Anspruch 6, wobei das Abgasrohr (26b) derart aufgebaut ist, dass es die Abgase in der gleichen Richtung wie die Strömung der Kühlluft zwischen dem Haubenhauptkörper (41) und der Platte (42) abgibt.

8. Kühlsystem in einer Baumaschine, umfassend:
einen Motorraum (2B), welcher einen Motor (26) und einen Dämpfer (26a) zur Geräuschdämpfung, wenn Abgase aus dem Motor (26) abgegeben werden, enthält, und eine Öffnung (22a) zur Wartung aufweist, die in einer Deckenoberfläche (22) ausgebildet ist;
eine Kühlluft-Abgabeöffnung, die in dem Motorraum (2B) ausgebildet ist;
einen Kühllüfter (25), der innerhalb des Motorraums (2B) zur Zirkulierung von Kühlluft angeordnet ist;
eine Kühleinheit (24), die innerhalb des Motorraums (2B) angeordnet ist; und
eine Motorhaube (40) nach Anspruch 1 oder 2, angebracht auf der Deckenoberfläche (22), um so die Öffnung (22a) zur Wartung abzudecken und aufzudecken, wobei die Motorhaube (40) mit dem Haubenhauptkörper (41) und der Platte (42) gebildet ist.

9. Kühlsystem nach Anspruch 8, wobei die Motorhaube (40) auf der Deckenoberfläche (22) angebracht ist, so dass der Spalt (44) nach Anspruch 1 oberhalb des Kühllüfters (25) positioniert ist.

10. Kühlsystem nach Anspruch 8 oder 9, wobei eine Dimensionierung und Anordnung in einer axialen Strömungsrichtung (Y) des Kühllüfters (25) des Haubenhauptkörpers (41) so gewählt sind, dass der Motor (26) und der Dämpfer (26a) in der axialen Strömungsrichtung (Y) abgedeckt werden.

11. Kühlsystem nach Anspruch 10, wobei eine Dimensionierung und Anordnung in der axialen Strömungsrichtung (Y) des Kühllüfters (25) der Platte (42) so gewählt sind, dass der Motor (26) und der Dämpfer (26a) in der axialen Strömungsrichtung (Y) abgedeckt werden.

12. Kühlsystem nach Anspruch 10 oder 11, wobei eine Gasabgabeöffnung (26ba) des Abgasrohrs (26b) zwischen dem Haubenhauptkörper (41) und der Platte (42) angeordnet ist.

13. Kühlsystem nach Anspruch 12, wobei das Abgasrohr (26b) derart aufgebaut ist, dass es die Abgase in der gleichen Richtung wie die Strömung der Kühlluft zwischen dem Haubenhauptkörper (41) und der Platte (42) abgibt.

## Revendications

1. Capot moteur dans une machine de construction qui est installé pour couvrir et découvrir une ouverture (22a) pour la maintenance formée dans une surface de plafond (22) d'un compartiment moteur (2B) contenant un moteur (26), un boîtier de refroidissement (24), et un ventilateur de refroidissement (25), ledit capot moteur comprenant :
un corps principal de capot (41) installé extérieurement par rapport au compartiment moteur (2B) et de manière pivotante sur ladite surface de plafond (22) afin de couvrir et découvrir ladite ouverture (22a), ledit corps principal de capot (41) étant formé selon une configuration bombée vers le haut dans une position couvrante dans laquelle ladite ouverture (22a) est couverte et ayant également une portion aval, formée dans une direction d'écoulement axial (Y) dudit ventilateur de refroidissement (25), où un orifice d'évacuation d'air de refroidissement (41ba) est formé ; et
une plaque (42) installée à l'intérieur de la configuration bombée dudit corps principal de capot (41), et installée dans une position distante verticalement d'une portion de plafond dudit corps principal de capot (41) et sur un côté compartiment moteur (2B) distant dudit orifice d'évacuation (41ba) ;
dans lequel ladite plaque (42) forme un espace prédéterminé (44) entre son côté amont et ledit corps principal de capot (41), et est installée de manière fixe par son côté aval sur ledit corps principal de capot (41).

2. Capot moteur selon la revendication 1, dans lequel une plaque de redressement est placée le long de ladite direction d'écoulement axial (Y) entre ledit corps principal de capot (41) et ladite plaque (42).

3. Structure de compartiment moteur dans une machine de construction qui contient un moteur (26), un silencieux (26a) pour amortir un son lorsque des gaz d'échappement sont évacués dudit moteur (26), un boîtier de refroidissement (24), et un ventilateur de refroidissement (25) pour faire circuler de l'air pour refroidir ledit boîtier de refroidissement (24), et qui a une ouverture (22a) pour la maintenance formée dans une surface de plafond (22), ladite structure de compartiment moteur comprenant :
le capot moteur (40) selon la revendication 1 ou la revendication 2, installé sur ladite surface de plafond (22) pour couvrir et découvrir ladite ouverture (22a), ledit capot moteur (40) étant composé du corps principal de capot (41) et de la plaque (42).

4. Structure de compartiment moteur selon la revendication 3, dans laquelle ledit capot moteur (40) est installé sur ladite surface de plafond (22) afin que l'espace décrit dans la revendication 1 soit positionné au-dessus dudit ventilateur de refroidissement (25).

5. Structure de compartiment moteur selon la revendication 3 ou 4, dans laquelle
une dimension et un agencement, dans une direction d'écoulement axial (Y) dudit ventilateur de refroidissement (25), dudit corps principal de capot (41) sont définis de manière à couvrir ledit moteur (26) et ledit silencieux (26a) dans ladite direction d'écoulement axial (Y) ; et
une dimension et un agencement dans ladite direction d'écoulement axial (Y) de ladite plaque (42) sont définis de manière à couvrir ledit moteur (26) et ledit silencieux (26a) dans ladite direction d'écoulement axial (Y).

6. Structure de compartiment moteur selon la revendication 5, dans laquelle un orifice d'évacuation de gaz (26ba) dudit tuyau de gaz d'échappement (26b) est agencé entre ledit corps principal de capot (41) et ladite plaque (42).

7. Structure de compartiment moteur selon la revendication 6, dans laquelle ledit tuyau de gaz d'échappement (26b) est construit de telle manière qu'il évacue lesdits gaz d'échappement dans la même direction que l'écoulement de l'air de refroidissement entre ledit corps principal de capot (41) et ladite plaque (42).

8. Système de refroidissement dans une machine de construction comprenant :
un compartiment moteur (2B) qui contient un moteur (26) et un silencieux (26a) pour étouffer un son lorsque des gaz d'échappement sont évacués dudit moteur (26), et a une ouverture (22a) pour la maintenance formée dans une surface de plafond (22) ;
une ouverture d'évacuation d'air de refroidissement formée dans ledit compartiment moteur (2B) ;
un ventilateur de refroidissement (25) agencé dans ledit compartiment moteur (2B) pour faire circuler de l'air de refroidissement ;
un boîtier de refroidissement (24) agencé dans ledit compartiment moteur (2B) ; et
le capot moteur (40) selon la revendication 1 ou 2, installé sur ladite surface de plafond (22) pour couvrir et découvrir ladite ouverture (22a) pour la maintenance, ledit capot moteur (40) étant composé du corps principal de capot (41) et de la plaque (42).

9. Système de refroidissement selon la revendication 8, dans lequel ledit capot moteur (40) est installé sur ladite surface de plafond (22) afin que l'espace (44) décrit dans la revendication 1 soit positionné au-dessus dudit ventilateur de refroidissement (25).

10. Système de refroidissement selon la revendication 8 ou 9, dans lequel une dimension et un agencement, dans une direction d'écoulement axial (Y) dudit ventilateur de refroidissement (25), dudit corps principal de capot (41) sont définis de manière à couvrir ledit moteur (26) et ledit silencieux (26a) dans ladite direction d'écoulement axial (Y).

11. Système de refroidissement selon la revendication 10, dans lequel une dimension et un agencement dans ladite direction d'écoulement axial (Y) dudit ventilateur de refroidissement (25), de ladite plaque (42) sont définis de manière à couvrir ledit moteur (26) et ledit silencieux (26a) dans ladite direction d'écoulement axial (Y).

12. Système de refroidissement selon la revendication 10 ou 11, dans lequel un orifice d'évacuation de gaz (26ba) dudit tuyau de gaz d'échappement (26b) est agencé entre ledit corps principal de capot (41) et ladite plaque (42).

13. Système de refroidissement selon la revendication 12, dans lequel ledit tuyau de gaz d'échappement (26b) est construit de telle manière qu'il évacue lesdits gaz d'échappement dans la même direction que l'écoulement dudit air de refroidissement entre ledit corps principal de capot (41) et ladite plaque (42).
